# EUROPEAN PATENT SPECIFICATION

(11) **EP 2 990 673 B1**
(45) Date of publication and mention of the grant of the patent: **31.05.2017**
(21) Application number: 15178333.9
(22) Date of filing: 24.07.2015
(51) Int. Cl.: F16C 33/76, B60B 27/00, F16C 41/00, F16C 19/18

(54) **ROLLING BEARING UNIT WITH AN ENCODER AND PROTECTIVE COVER WITH A SENSOR FOR A VEHICLE WHEEL HUB**
WÄLZLAGEREINHEIT MIT EINEM SIGNALGEBER UND EINER SCHUTZABDECKUNG MIT EINEM SENSOR FÜR DIE RADNABE EINES FAHRZEUGES
ENSEMBLE DE ROULEMENT AVEC CODEUR ET COUVERCLE DE PROTECTION AVEC CAPTEUR POUR UN MOYEU DE ROUE DE VÉHICULE

(30) Priority: 26.08.2014 IT TO20140682
(43) Date of publication of application: 02.03.2016
(73) Proprietor: Aktiebolaget SKF, 415 50 Göteborg (SE)
(72) Inventor: BARATTI, Paolo, 10125 Torino (TO) (IT); SERAFINI, Andrea, 10064 Pinerolo (TO) (IT); Re, Paolo, 10042 Nichelino (IT)
(74) Representative: Tedeschini, Luca

(56) References cited:
- DE-U1-202005 005 260
- JP-A- 2004 052 832
- JP-A- 2007 309 389
- JP-A- 2008 105 626
- JP-A- 2013 221 549
- US-A- 5 814 984

## Description

### Technical sector of the invention

The present invention relates to a rolling bearing, in particular to a vehicle wheel hub bearing unit, of the type provided with a sensor bearing element in the shape of a sealing cover coupled to the outer ring.

### Prior art

As known, for example from US 5 814 984 A, which discloses a rolling bearing with the features of the preamble of claim 1, rolling bearings constituting vehicle hub bearing units intended to equip non-driving wheels comprise an inner ring, rotating in use, equipped on the outboard side, i.e. on the side facing towards the outside of the vehicle, with a flange for mounting a vehicle wheel, an outer ring, stationary in use, e.g. fixed to a suspension of the vehicle, a plurality of rolling bodies interposed between the inner and outer rings, and a closing and sealing cover arranged on the inboard side, i.e. facing towards the inside of the vehicle, which closes an open annular end of the outer ring in fluid-tight manner. Such a cover is provided, instead of the usual sealing assembly interposed on this side between the inner and outer rings, in order to prevent the introduction of contaminants through the open end of the outer ring and, above all, to adequately support in protected manner a sensor adapted to detect the rotation speed of the vehicle wheel in cooperation with an element to be detected, also known as "phonic wheel", integrally carried by the inner ring within a closed chamber defined between the cover and the outer ring.

The cover is mounted integral with the outer ring, driven in axial abutment and by interference in the open end of the outer ring. For this purpose, the cover is formed by a cup-shaped body made of a synthetic plastic material co-molded onto a cylindrical metal sleeve, which defines at least one lateral radial coupling surface of the cover with the outer ring.

However, it has been found in hydraulic tightness tests with pressurized air that the interference coupling between cover and outer ring does not guarantee a complete sealing of the chamber in which the element to be detected is arranged and which is faced by the sensor carried by the cover. In particular, there are two paths of possible fluid leakage: a first path develops along the radial interference coupling surfaces between metal sleeve and outer ring and the axial shoulder coupling surfaces between the part of the cover defined by the plastic made cup-shaped body and a frontal surface of the open annular end of the outer ring; a second path develops along the coupling surfaces between the metal sleeve and the plastic made body, co-molded on the metal sleeve, because the normal co-molding techniques do not guarantee the absence of micro cracks in the metal/plastic interface.

Such a second path then flows into the first path at the axial shoulder coupling between the part of the cover defined by the synthetic plastic made cup-shaped body and the frontal surface of the open annular end of the outer ring.

In order to block possible leakages, US 5 814 984 A, according to the embodiment depicted in figures 1 to 3, suggests to arrange an annular sealing element, in practice, an o-ring, in series to both the first and second leakage paths, in practice by arranging the o-ring within a truncated-cone shaped seat obtained on the open annular end of the outer ring between an inner radially lateral surface of the outer ring and the frontal surface of the open annular end of the outer ring so that the o-ring can exert a radial and axial sealing action between cover and outer ring at the same time.

This solution is not free from drawbacks. Indeed, the double sealing action that the o-ring is called to perform as a result of its mounting position produces an unpredictable, uncontrollable deformation which make it difficult to mount the cover on the outer ring but, above all, causes positioning errors, particularly axial positioning errors, of the cover with respect to the outer ring, and consequently of the sensor with respect to the element to be detected, thus producing a sometimes considerable decay of quality of the electrical signal produced by the sensor in use.

Similar drawbacks are also found in the solution according to another embodiment depicted in figures 4 and 5 of US 5 814 984 A in which the o-ring is housed in an annular seat obtained on the part of the cover defined by the plastic body, because of the inevitable variations of planarity present on the plastic surfaces which delimit the housing seat of the o-ring because of the inevitable dimensional inaccuracies caused by the processing tolerances.

### Summary of the invention

It is the object of the present invention to provide a rolling bearing, in particular of a vehicle wheel hub unit, of the type provided with a sensor bearing element in the shape of a sealing cover coupled to the outer ring, such as that of US 5 814 984 A but free from the drawbacks highlighted and in which any possible leakage of fluid along the two described possible paths is eliminated at the same time without needing to adopt special co-molding techniques to obtain the cover or other technical complex and economically costly solutions.

According to the invention, a rolling bearing is thus provided, in particular a vehicle wheel hub bearing unit, of the type provided with a sensor bearing element in the shape of sealing cover coupled to the outer ring of the bearing, as defined in the appended claims.

According to the invention, a housing seat defined by an annular groove delimited by a bottom wall and a pair of opposite end faces is made on the outer ring for an annular sealing element of the o-ring type which is obtained on the radial frontal surface of the open end of the outer ring which receives in axial abutment a corresponding shoulder frontal surface of the cover defined by the plastic made body and which allows the free deformation of the sealing element in radial direction by predetermined radial clearances between the o-ring and the end faces of the annular groove so as to "close" both the first and the second possible leakage path with the o-ring without the drawbacks of the prior art.

### Brief description of the drawings

The invention will now be described with reference to the accompanying drawings which illustrate a non-limitative embodiment thereof, in which:
- figure 1 diagrammatically shows an elevated view taken along a radial plane of a rolling bearing constituting a wheel hub bearing unit made according to the invention; and
- figure 2 shows a detail of the rolling bearing in figure 1 on enlarged scale.

### Detailed description

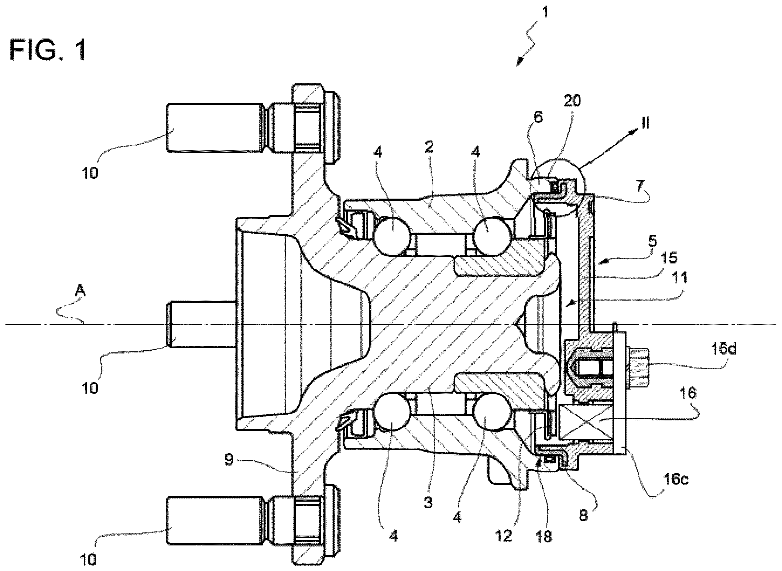

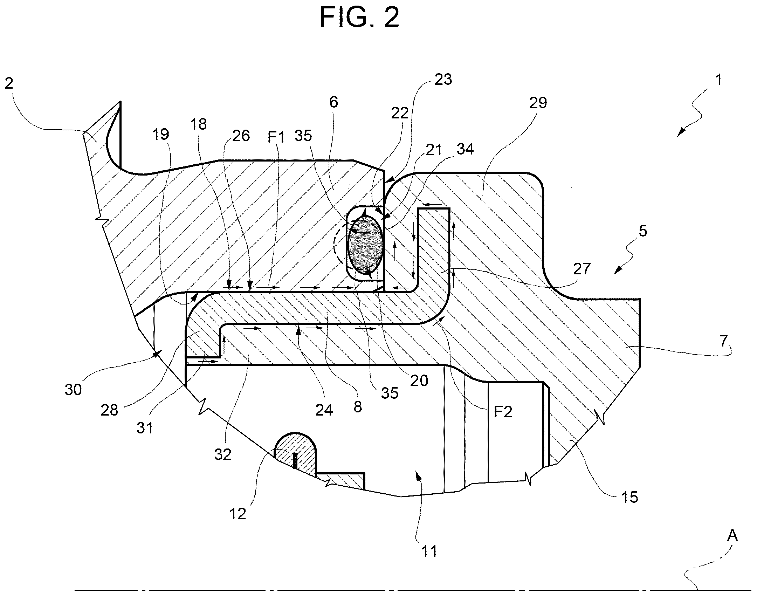

With reference to figures 1 and 2, reference numeral 1 indicates as a whole a rolling bearing, in particular defining in the preferred embodiment shown, a vehicle hub bearing unit, known in itself.

The rolling bearing 1 comprises an outer ring 2, stationary in use, an inner ring 3, rotating in use about a common symmetry axis A of the inner ring 3 and the outer ring 2, a plurality of rolling bodies 4 interposed between the inner ring 3 and the outer ring 2, and a closing and sealing cover 5, which fluid-tightly closes a first open annular end 6 of the outer ring 2; the cover 5 forms a sensor bearing element, as explained below.

The cover 5 is mounted in integral manner on the outer ring 2, driven in axial abutment and radial interference on the first end 6 and is formed (figure 2) by a plastic made body 7, made by molding of a synthetic plastic material, and a cylindrical metal sleeve 8, made of steel by pressing, for example, co-molded with the plastic made body 7.

In the example shown, the rolling bearing 1 is a wheel hub bearing unit, in which the inner ring 3 is equipped, on a side thereof opposite to the cover 5, with a flange 9 for mounting a vehicle wheel (known and not shown for the sake of simplicity) by means of screws or pins 10 carried by the flange 9.

A closed chamber 11 is delimited between the cover 5, the outer ring 2 and the inner ring 3, in which an element to be detected 12 or "phonic wheel" is housed, which element to be detected 12 is integrally carried by the inner ring 3 in position facing a bottom wall 15 of the cover or sensor bearing element 5, which supports a sensor 16 in protected manner (only diagrammatically shown with a block in figure 1), which sensor 16 is housed through the bottom wall 15, on which it is mounted by means of a flange 16c and a screw 16d, in the shown example; the sensor 16 (known) is adapted to detect the rotation speed of the vehicle wheel in cooperation with the element to be detected 12. The bottom wall 15 is arranged facing the open end 6 of the inner ring 2.

For the optimal operation of the sensor 16, the sensor bearing element defined by the cover 5 must be positioned with extreme accuracy with respect to the rings 2 and 3, in particular in an axial direction, i.e. parallel to axis A.

The metal sleeve 8 defines for this purpose at least one radial coupling radially outer lateral surface 18 of the sensor bearing element 5 with a radially inner lateral surface 19 of the outer ring 2; an elastically deformable annular sealing element 20 defined by an o-ring is further arranged between the sensor bearing element 5 and the outer ring 2 housed in an annular housing seat 21 obtained on the outer ring 2.

In figure 2, the o-ring 20 is shown with a dashed line in a non-deformed configuration and with a solid line in a deformed working configuration of normal operation.

With reference to figure 2, for a series of construction reasons known in the art, in the rolling bearing 1 there is a first passage F1 of possible leakage of the fluid, indicated by the arrows on the left side in figure 2, and a second passage F2 of possible leakage of fluid, indicated by the arrows on the right side in figure 2.

In particular, the passage F1 of possible leakage of fluid develops according to the arrows:
- along radial interference coupling lateral surfaces between cover 5 and outer ring 2 defined by the radially inner surface 19 of the outer ring 2 and by the radially outer surface 18 of the cover 5; and
- along respective axial shoulder coupling surfaces between the sensor bearing cover 5 and the outer ring 2 defined by an axial shoulder frontal surface 22 of the sensor bearing cover 5 delimited by the plastic made body 7 and by a frontal surface 23 of the front end 6 of the outer ring 2.

Instead, the second passage F2 of possible leakage of fluid develops, according to the arrows, along a first contact interface between cylindrical metal sleeve 8 and plastic made body 7 defined by a radially inner lateral cylindrical surface 24 of the metal sleeve 8 and along a second contact interface defined by the frontal axial coupling between the axial shoulder coupling surfaces between the plastic made body 7 of the sensor bearing cover 5 and the outer ring 2 defined in turn, as indicated above, for passage F1, by the axial shoulder frontal surface 22 of the sensor bearing cover 5 delimited by the plastic made body 7 and by the frontal surface 23 of the first end 6 of the outer ring 2.

According to the invention, the housing seat 21 for the annular sealing element 20 is made so that the sealing element 20 exerts an axial sealing action towards the sensor bearing element defined by the cover 5 and allows, at the same time, a free deformation in radial direction of the annular sealing element 20.

In particular, the housing seat 21 for the annular sealing element 20 is obtained directly and entirely in the outer ring 2 and is made totally and exclusively at the shoulder frontal surface 23 of the end 6 of the outer ring 2 and facing the axial shoulder frontal surface 22 of the sensor bearing cover 5 delimited by the plastic made body 7.

Furthermore, the axial dimensions of the housing seat 21 are such to ensure an axial sealing action between steel outer ring 2 and plastic made body 7 which delimit the axial shoulder frontal surface 22 of the sensor bearing cover 5.

The sealing action is determined by the annular sealing element 20, which cooperates with axial interference against the sensor bearing cover 5, being sandwiched and axially compressed between the housing seat 21 and the axial shoulder frontal surface 22 of the cover 5 delimited by the plastic made body 7; the sealing element 20 is thus inserted axially by interference between the seat 21 and the axial shoulder frontal surface 22, so that the annular sealing element 20, as shown in figure 2, intercepts both the first passage F1 and the second passage F2 of possible leakage of fluid.

Furthermore, the housing seat 21 has such radial dimensions as to allow a free deformation of the sealing element 20 in radial direction.

According to the invention, the housing seat 21 for the annular sealing element 20 is defined by an annular groove 21 obtained on the frontal surface 23 of the first end 6 of the outer ring 2 and delimited by an annular bottom wall 34 arranged facing the axial shoulder frontal surface 22 of the sensor bearing element 5 in shape of cover delimited by the plastic made body 7, and by a pair of opposite end faces 35, facing each other and parallel to the radially inner lateral surface 19 of the outer ring 2.

The annular sealing element consists of an elastically deformable o-ring 20 axially inserted with interference between the annular bottom wall 34 of the annular groove 21 and the axial shoulder frontal surface 22 of the sensor bearing cover 5 which, by being delimited by the plastic made body 7, is a plastic made surface.

Furthermore, a predetermined radial clearance is present between the annular sealing element 20 and both end faces 35 of the annular groove facing each other.

Indeed, it has been surprisingly found that by means of the described configuration of the housing seat 21 and of the sealing element 20 and, above all, by moving the housing seat of the sealing element 20 with respect to the prior art constituted by US 5 814 984 A from the sensor bearing cover to the outer ring, all the drawbacks of the prior art are overcome, because possible leakages are prevented without any risk of obtaining an incorrect or difficult positioning of the sensor bearing cover 5 on the outer ring 2 with respect to the inner ring 3.

Such a result is also obtained by virtue of a particular construction of the sensor bearing cover 5 and in particular of the metal sleeve made of steel 8, which does not imply any drawback in the co-molding between sleeve 8 and plastic body 7 and which does not require changes to the co-molding methods.

In particular, the cylindrical metal sleeve 8 is delimited between a radially outer cylindrical lateral surface 26 thereof defining the at least one radial coupling lateral surface 18 of the sensor bearing cover 5 and a radially inner cylindrical lateral surface 24 thereof defining the contact interface between cylindrical metal sleeve 8 and plastic made body 7.

Furthermore, the cylindrical metal sleeve 8 is provided with a first end 27 distal from the outer ring 2, radially folded outwards in an L-shape and with a second end 28, vicinal to the outer ring 2, opposite to the distal end 27 and radially folded inwards in an L-shape.

The end 27 is completely embedded in a first, flange shaped, portion 29 of the plastic made body 7; the flange portion 29 delimits the plastic axial shoulder frontal surface 22 of the sensor bearing cover 5.

Conversely, the end 28 defines towards the outer ring 2, a metal frontal end 30 of the sensor bearing cover 5 and has a radially inner edge 31 embedded in (and thus covered by) a second, sleeve shaped, portion 32 of the plastic made body 7.

The second portion 32 of the plastic made body 7 extends parallel to the metal sleeve 8 and in contact with the radially inner lateral surface 24 of the metal sleeve 8; furthermore, the portions 29 and 32 are obtained integral in one piece with one another and with the bottom wall 15 of the sensor bearing cover 5, wall 15 which is thus an integral part of the plastic body 7.

The described conformation of the metal sleeve 8, and consequently of the sensor bearing element 5 in the shape of cover and considered as a whole, facilitates in use the driving by interference of the radial coupling portion of the sensor bearing cover 5 defined by the metal sleeve 8.

Furthermore, according to a further aspect of the invention, the housing seat 21 for the annular sealing element 20 is arranged in front of the distal end 27 of the cylindrical metal sleeve, end 27 which is folded as an L radially outwards and embedded in the flange portion 29 of the plastic made body 7.

In this manner, the plastic made axial shoulder frontal surface 22 of the sensor bearing cover 5 is at least at the annular sealing element 20 flanked by the distal end 27 made of steel of the cylindrical metal sleeve 8.

It is worth noting that the deformations to which the portion 29 may be subjected in use are contrasted by the end 27 folded as an L of the sleeve 8 which, above all, also contrasts the possible deformations of planarity to which the plastic surface 22 may be subjected, e.g. caused by the axial stress applied by the coupling in abutment against the surface 23, and transmitted by the forced coupling with the annular sealing element 20.

This effect above all depends on the combination of the described conformation of the metal sleeve 8 with the shifting, with respect to the prior art and according to the invention, of the housing seat 21 from the sensor bearing cover 5 to the outer ring 2.

Finally, the presence of a predetermined radial clearance in the seat 21 defined by the groove 21b between faces 35 and sealing element 20 allows the sealing element 20 to be deformed in controlled, predictable manner, by virtue of the absence of obstacles.

All the objects of the invention are thus reached.

## Claims

1. A rolling bearing (1), in particular a vehicle hub bearing unit, comprising an outer ring (2), stationary in use, an inner ring (3), rotating in use about a common symmetry axis (A) of the inner and outer rings, a plurality of rolling bodies (4) interposed between the inner and outer rings, and a sensor bearing element (5), preferably in the shape of a closing and sealing cover (5), which fluid-tightly closes a first open annular end (6) of the outer ring; the sensor bearing element (5) being mounted integral with the outer ring (2), driven in axial abutment and radial interference on the first end (6) of the outer ring, and being formed by a plastic made body (7), made of a synthetic plastic material, and by a cylindrical metal sleeve (8), co-molded with the plastic made body (7), which metal sleeve defines at least one radially outer, radial coupling lateral surface (18) of the sensor bearing element (5) with a radially inner lateral surface (19) of the outer ring (2); between the sensor bearing element (5) and the outer ring (2) there being arranged an annular element (20) housed in a seat (21), there being present in the bearing:
- a first passage (F1) of possible leakage of fluid along the radially inner, radial coupling lateral surface (19) of the outer ring (2) and the radially outer, radial coupling lateral surface (18) of the sensor bearing element (5), and along respective axial abutment coupling surfaces between the sensor bearing element (5) and the outer ring (2) defined by an axial shoulder frontal surface (22) of the sensor bearing element (5) delimited by the plastic made body (7) and by a frontal surface (23) of the first end (6) of the outer ring (2); and
- a second passage (F2) of possible leakage of fluid along a first contact interface (24) between the cylindrical metal sleeve (8) and the plastic made body (7) and along a second contact interface between the axial shoulder coupling surfaces (22,23) between the plastic made body (7) of the sensor bearing element (5) and the outer ring (2);
wherein:
i)- the housing seat (21) for the annular sealing element (20) is wholly obtained in the outer ring (2), on the frontal surface (23) of the first end (6) of the outer ring (2) and in front of the axial shoulder frontal surface (22) of the sensor bearing element (5) delimited by the plastic made body (7);
ii)- the annular sealing element (20) cooperates with axial interference against the sensor bearing element (5), being sandwiched and axially compressed between the housing seat (21) and the axial shoulder frontal surface (22) of the sensor bearing element (5) delimited by the plastic made body (7);
iii)- so that the annular sealing element (20) cuts off both the first (F1) and the second (F2) passage of possible leakage of fluid;
**characterized in that**
iv)- the housing seat (21) for the annular sealing element is defined by an annular groove (21) obtained on the frontal surface (23) of the first end (6) of the outer ring (2) and delimited by an annular bottom wall (34) facing the axial shoulder frontal surface (22) of the sensor bearing element (5) delimited by the plastic made body (7), and by a pair of opposite end faces (35), facing each other and parallel to the radially inner lateral surface (19) of the outer ring (2);
v)- the annular sealing element consists of an elastically deformable o-ring (20) axially inserted with interference between the annular bottom wall (34) of the annular groove (21b) and the axial shoulder frontal surface (22) of the sensor bearing element (5) which, by being delimited by the plastic made body (7), is a plastic made surface;
vi)- a predetermined radial clearance is present between the annular sealing element (20) and both end faces (35) of the annular groove facing each other.

2. A rolling bearing (1) according to claim 1, **characterized in that** the dimensions of the housing seat (21) are such to allow a free deformation of the sealing element (20) in radial direction.

3. A rolling bearing (1) according to any one of the preceding claims, **characterized in that**, in combination:
- the cylindrical metal sleeve (8) is delimited between a radially outer cylindrical lateral surface (26) thereof defining the at least one radial coupling lateral surface (18) of the sensor bearing element (5) and a radially inner cylindrical lateral surface (24) thereof defining the first contact interface between the cylindrical metal sleeve (8) and the plastic made body (7);
- the cylindrical metal sleeve (8) is provided with: a distal end (27) from the outer ring, radially folded outwards in an L-shape, which is completely embedded in a first flange-shaped portion of the plastic made body (7), such a first portion (29) of the plastic made body delimiting the axial shoulder frontal surface (22) of the sensor bearing element; and a vicinal end (28) to the outer ring, opposite to the distal end (27) and radially folded inwards as an L, which defines a metal frontal end (30) of the sensor bearing element towards the outer ring (2) and which has a radially inner edge (31) embedded in a second sleeve-shaped portion (32) of the plastic made body (7); the second portion (32) of the plastic made body extending parallel to the metal sleeve (8) and in contact with the radially inner lateral surface (24) of the metal sleeve; the first and the second portion (29,32) of the plastic made body (7) being made integrally in one piece with each other and with a bottom wall (15) of the plastic made body (7) arranged facing the first open end (6) of the outer ring.

4. A rolling bearing (1) according to claim 3, **characterized in that** the housing seat (21) of the annular sealing element (20) is arranged in front of the distal end (27) of the cylindrical metal sleeve, which is radially folded outwards as an L and embedded in the flange-shaped portion (29) of the plastic made body (7), so that the plastic made axial shoulder frontal surface (22) of the sensor bearing element (5) is, at least at the annular sealing element (20), posteriorly flanked by the distal end (27) of the cylindrical metal sleeve (8).

5. A rolling bearing (1) according to any one of the preceding claims, **characterized in that** the inner ring (3) is equipped on a side thereof opposite to the sensor bearing element (5) with a flange (9) for the assembly of a vehicle wheel.

6. A rolling bearing (1) according to claim 5, **characterized in that** a closed chamber (11) is delimited between the sensor bearing element in the shape of a cover (5), the outer ring (2) and the inner ring (3), in which an element to be detected (12) is housed, which element to be detected (12) is integrally carried by the inner ring (3) in position facing a bottom wall (15) of the sensor bearing element, which supports a sensor (16) in protected manner, facing the inside of the closed chamber (11), adapted to detect the rotation speed of the vehicle wheel in cooperation with the element to be detected (12).

## Patentansprüche

1. Wälzlager (1), insbesondere eine Fahrzeugnabenlagereinheit, umfassend einen im Gebrauch feststehenden äußeren Ring (2), einen inneren Ring (3), der sich im Gebrauch um eine gemeinsame Symmetrieachse (A) des inneren und des äußeren Rings dreht, eine Vielzahl von Wälzkörpern (4), die zwischen dem inneren und dem äußeren Ring angeordnet sind, und ein Sensorlagerungselement (5), das vorzugsweise die Form einer verschließenden und abdichtenden Abdeckung (5) aufweist, die auf flüssigkeitsdichte Weise ein erstes offenes ringförmiges Ende (6) des äußeren Rings verschließt, wobei das Sensorlagerungselement (5) einstückig mit dem äußeren Ring (2) befestigt ist, in axialer Angrenzung an das erste Ende (6) des äußeren Rings und in radialem Eingriff mit demselben betrieben ist und durch einen aus Kunststoff bestehenden Körper (7), der aus einem synthetischen Kunststoffmaterial hergestellt ist, und durch eine zylindrische Metallhülse (8) gebildet ist, die zusammen mit dem aus Kunststoff bestehenden Körper (7) geformt ist, wobei die Metallhülse wenigstens eine radial äußere, mit einer radial inneren Seitenfläche (19) des äußeren Rings (2) radial koppelnde Seitenfläche (18) des Sensorlagerungselements (5) festlegt, wobei zwischen dem Sensorlagerungselement (5) und dem äußeren Ring (2) ein in einem Sitz (21) untergebrachtes ringförmiges Element (20) angeordnet ist, wobei in dem Lager Folgendes vorhanden ist:
- ein erster Durchgang (F1) für ein mögliches Ausströmen von Flüssigkeit entlang der radial inneren radial koppelnden Seitenfläche (19) des äußeren Rings (2) und der radial äußeren radial koppelnden Seitenfläche (18) des Sensorlagerungselements (5) und entlang entsprechender unter axialer Angrenzung koppelnder Flächen zwischen dem Sensorlagerungselement (5) und dem äußeren Ring (2), die durch eine axiale Schulterstirnfläche (22) des Sensorlagerungselements (5), das durch den aus Kunststoff bestehenden Körper (7) begrenzt ist, und durch eine Stirnfläche (23) des ersten Endes (6) des äußeren Rings (2) festgelegt sind, und
- ein zweiter Durchgang (F2) für ein mögliches Ausströmen von Flüssigkeit entlang einer ersten Kontaktfläche (24) zwischen der zylindrischen Metallhülse (8) und dem aus Kunststoff bestehenden Körper (7) und entlang einer zweiten Kontaktfläche zwischen den axialen Schulterkopplungsflächen (22, 23) zwischen dem aus Kunststoff bestehenden Körper (7) des Sensorlagerungselements (5) und dem äußeren Ring (2),
wobei:
i) der Sitz (21) zum Unterbringen des ringförmigen Dichtungselements (20) vollständig in dem äußeren Ring (2), auf der Stirnfläche (23) des ersten Endes (6) des äußeren Rings (2) und vor der axialen Schulterstirnfläche (22) des durch den aus Kunststoff bestehenden Körper (7) begrenzten Sensorlagerungselements (5) gelegen ist,
ii) das ringförmige Dichtungselement (20) mit axialem Eingriff gegen das Sensorlagerungselement (5) zusammenwirkt und dabei zwischen dem Gehäusesitz (21) und der axialen Schulterstirnfläche (22) des durch den aus Kunststoff bestehenden Körper (7) begrenzten Sensorlagerungselements (5) liegt und axial zusammengedrückt wird,
iii) so dass das ringförmige Dichtungselement (20) sowohl den ersten (F1) als auch den zweiten (F2) Durchgang für ein mögliches Ausströmen von Flüssigkeit absperrt,
**dadurch gekennzeichnet, dass**
iv) der Sitz (21) zum Unterbringen des ringförmigen Dichtungselements durch eine ringförmige Nut (21) festgelegt ist, die auf der Stirnfläche (23) des ersten Endes (6) des äußeren Rings (2) gelegen ist und durch eine ringförmige untere Wand (34), die der axialen Schulterstirnfläche (22) des durch den aus Kunststoff bestehenden Körper (7) begrenzten Sensorlagerungselements (5) zugewandt ist, und durch ein Paar gegenüberliegender Endflächen (35) begrenzt ist, die einander zugewandt sind und parallel zu der radial inneren Seitenfläche (19) des äußeren Rings (2) verlaufen,
v) das ringförmige Dichtungselement aus einem elastisch verformbaren O-Ring (20) besteht, der axial unter einem Eingriff zwischen der ringförmigen unteren Wand (34) der ringförmigen Nut (21b) und der axialen Schulterstirnfläche (22) des Sensorlagerungselements (5) eingesetzt ist, die dadurch, dass sie durch den aus Kunststoff bestehenden Körper (7) begrenzt ist, eine aus Kunststoff bestehende Fläche ist,
vi) ein vorgegebener radialer Freiraum zwischen dem ringförmigen Dichtungselement (20) und den beiden einander zugewandten Endflächen (35) der ringförmigen Nut vorhanden ist.

2. Wälzlager (1) nach Anspruch 1, **dadurch gekennzeichnet, dass** die Abmessungen des Gehäusesitzes (21) derart sind, dass sie eine freie Verformung des Dichtungselements (20) in radialer Richtung ermöglichen.

3. Wälzlager (1) nach einem der vorhergehenden Ansprüche, **dadurch gekennzeichnet, dass** in Kombination:
- die zylindrische Metallhülse (8) zwischen einer radial äußeren zylindrischen Seitenfläche (26) derselben, die die wenigstens eine radial koppelnde Seitenfläche (18) des Sensorlagerungselements (5) festlegt, und einer radial inneren zylindrischen Seitenfläche (24) derselben, die die erste Kontaktfläche zwischen der zylindrischen Metallhülse (8) und dem aus Kunststoff bestehenden Körper (7) festlegt, begrenzt ist,
- die zylindrische Metallhülse (8) mit Folgendem versehen ist: einem von dem äußeren Ring entfernt gelegenen Ende (27), das radial nach außen in einer L-Form gebogen und vollständig in einem ersten flanschförmigen Abschnitt des aus Kunststoff bestehenden Körpers (7) eingebettet ist, wobei ein derartiger erster Abschnitt (29) des aus Kunststoff bestehenden Körpers die axiale Schulterstirnfläche (22) des Sensorlagerungselements begrenzt, und einem dem äußeren Ring nahe gelegenen Ende (28), das dem entfernt gelegenen Ende (27) gegenüberliegt und radial nach innen in L-Form gebogen ist und ein aus Metall bestehendes Stirnende (30) des Sensorlagerungselements zu dem äußeren Ring (2) festlegt und einen radial inneren Rand (31) aufweist, der in einem zweiten hülsenförmigen Abschnitt (32) des aus Kunststoff bestehenden Körpers (7) eingebettet ist, wobei sich der zweite Abschnitt (32) des aus Kunststoff bestehenden Körpers parallel zu der Metallhülse (8) erstreckt und in Kontakt mit der radial inneren Seitenfläche (24) der Metallhülse steht, wobei der erste und der zweite Abschnitt (29, 32) des aus Kunststoff bestehenden Körpers (7) einstückig miteinander und mit einer unteren Wand (15) des aus Kunststoff bestehenden Körpers (7) ausgebildet sind, die so angeordnet ist, dass sie dem ersten offenen Ende (6) des äußeren Rings zugewandt ist.

4. Wälzlager (1) nach Anspruch 3, **dadurch gekennzeichnet, dass** der Gehäusesitz (21) des ringförmigen Dichtungselements (20) vor dem entfernt gelegenen Ende (27) der zylindrischen Metallhülse angeordnet ist, das in L-Form radial nach außen gebogen und in dem flanschförmigen Abschnitt (29) des aus Kunststoff bestehenden Körpers (7) eingebettet ist, so dass die aus Kunststoff bestehende axiale Schulterstirnfläche (22) des Sensorlagerungselements (5) wenigstens an dem ringförmigen Dichtungselement (20) hinten durch das entfernt gelegene Ende (27) der zylindrischen Metallhülse (8) flankiert wird.

5. Wälzlager (1) nach einem der vorhergehenden Ansprüche, **dadurch gekennzeichnet, dass** der innere Ring (3) auf einer Seite desselben, die dem Sensorlagerungselement (5) gegenüberliegt, mit einem Flansch (9) für die Montage eines Fahrzeugrads ausgestattet ist.

6. Wälzlager (1) nach Anspruch 5, **dadurch gekennzeichnet, dass** eine geschlossene Kammer (11) zwischen dem Sensorlagerungselement in Form einer Abdeckung (5), dem äußeren Ring (2) und dem inneren Ring (3) begrenzt ist, in der ein zu detektierendes Element (12) untergebracht ist, wobei das zu detektierende Element (12) einstückig von dem inneren Ring (3) in einer Position getragen ist, die einer unteren Wand (15) des einen Sensor (16) auf schützende Weise haltenden Sensorlagerungselements zugewandt ist, der Innenseite der geschlossenen Kammer (11) zugewandt und geeignet ist, die Umdrehungsgeschwindigkeit des Fahrzeugrads in Zusammenwirkung mit dem zu detektierenden Element (12) zu detektieren.

## Revendications

1. Palier à roulement (1), en particulier unité de palier de moyeu de véhicule, comprenant une bague externe (2), stationnaire pendant l'utilisation, une bague interne (3), tournant pendant l'utilisation autour d'un axe de symétrie commun (A) des bagues interne et externe, une pluralité de corps de roulement (4) interposés entre les bagues interne et externe, et un élément de support de capteur (5), de préférence sous la forme d'un couvercle de fermeture et d'étanchéité (5), qui ferme de manière étanche aux fluides une première extrémité annulaire ouverte (6) de la bague externe ; l'élément de support de capteur (5) étant monté de manière intégrale avec la bague externe (2), étant entraîné en butée axiale contre et avec ajustement radial sur la première extrémité (6) de la bague externe, et étant formé par un corps en plastique (7), fabriqué en un matériau plastique synthétique, et par un manchon métallique cylindrique (8) venu de moulage avec le corps en plastique (7), lequel manchon métallique définit au moins une surface latérale radialement externe d'accouplement radial (18) de l'élément de support de capteur (5) avec une surface latérale radialement interne (19) de la bague externe (2) ; un élément annulaire (20) reçu dans un siège (21) étant disposé entre l'élément de support de capteur (5) et la bague externe (2), le palier comprenant :
- un premier passage (F1) de fuite de fluide éventuelle le long de la surface latérale radialement interne d'accouplement radial (19) de la bague externe (2) et de la surface latérale radialement externe d'accouplement radial (18) de l'élément de support de capteur (5), et le long de surfaces d'accouplement de butée axiale respectives entre l'élément de support de capteur (5) et la bague externe (2), définies par une surface frontale d'épaulement axial (22) de l'élément de support de capteur (5) délimitée par le corps en plastique (7) et par une surface frontale (23) de la première extrémité (6) de la bague externe (2) ; et
- un deuxième passage (F2) de fuite de fluide éventuelle le long d'une première interface de contact (24) entre le manchon métallique cylindrique (8) et le corps en plastique (7) et le long d'une deuxième interface de contact entre les surfaces d'accouplement d'épaulement axial (22, 23) entre le corps en plastique (7) de l'élément de support de capteur (5) et la bague externe (2) ;
i)- le siège de boîtier (21) pour l'élément d'étanchéité annulaire (20) étant entièrement contenu dans la bague externe (2), sur la surface frontale (23) de la première extrémité (6) de la bague externe (2) et devant la surface frontale d'épaulement axial (22) de l'élément de support de capteur (5) délimitée par le corps en plastique (7) ;
ii)- l'élément d'étanchéité annulaire (20) coopérant avec ajustement axial contre l'élément de support de capteur (5), en étant pris en sandwich et comprimé axialement entre le siège de boîtier (21) et la surface frontale d'épaulement axial (22) de l'élément de support de capteur (5) délimitée par le corps en plastique (7) ;
iii)- de telle sorte que l'élément d'étanchéité annulaire (20) bloque à la fois le premier (F1) et le deuxième (F2) passage pour empêcher une fuite de fluide éventuelle ;
**caractérisé en ce que**
iv)- le siège de boîtier (21) pour l'élément d'étanchéité annulaire est défini par une gorge annulaire (21) réalisée sur la surface frontale (23) de la première extrémité (6) de la bague externe (2) et délimitée par une paroi inférieure annulaire (34) faisant face à la surface frontale d'épaulement axial (22) de l'élément de support de capteur (5) délimitée par le corps en plastique (7), et par une paire de faces d'extrémité opposées (35) en regard l'une de l'autre et parallèles à la surface latérale radialement interne (19) de la bague externe (2) ;
v)- l'élément d'étanchéité annulaire est constitué d'un joint torique déformable élastiquement (20) inséré axialement avec ajustement entre la paroi inférieure annulaire (34) de la gorge annulaire (21b) et la surface frontale d'épaulement axial (22) de l'élément de support de capteur (5) qui, en étant délimitée par le corps en plastique (7), est une surface en plastique ;
vi)- un jeu radial prédéterminé existe entre l'élément d'étanchéité annulaire (20) et les deux faces d'extrémité (35) de la gorge annulaire en regard l'une de l'autre.

2. Palier à roulement (1) selon la revendication 1, **caractérisé en ce que** les dimensions du siège de boîtier (21) sont telles qu'elles permettent une déformation libre de l'élément d'étanchéité (20) dans la direction radiale.

3. Palier à roulement (1) selon l'une quelconque des revendications précédentes, **caractérisé en ce que**, en combinaison :
- le manchon métallique cylindrique (8) est délimité entre une surface latérale cylindrique radialement externe (26) de celui-ci définissant l'au moins une surface latérale d'accouplement radial (18) de l'élément de support de capteur (5) et une surface latérale cylindrique radialement interne (24) de celui-ci définissant la première interface de contact entre le manchon métallique cylindrique (8) et le corps en plastique (7) ;
- le manchon métallique cylindrique (8) comprend : une extrémité distale (27) par rapport à la bague externe, pliée radialement vers l'extérieur en forme de L, qui est complètement incorporée dans une première portion en forme de bride du corps en plastique (7), une telle première portion (29) du corps en plastique délimitant la surface frontale d'épaulement axial (22) de l'élément de support de capteur ; et une extrémité proximale (28) par rapport à la bague externe, opposée à l'extrémité distale (27) et pliée radialement vers l'intérieur en forme de L, qui définit une extrémité frontale métallique (30) de l'élément de support de capteur vers la bague externe (2) et qui présente un bord radialement interne (31) incorporé dans une deuxième portion en forme de manchon (32) du corps en plastique (7) ; la deuxième portion (32) du corps en plastique s'étendant parallèlement au manchon métallique (8) et en contact avec la surface latérale radialement interne (24) du manchon métallique ; la première et la deuxième portion (29, 32) du corps en plastique (7) étant réalisées de manière intégrale d'une seule pièce l'une avec l'autre et avec une paroi inférieure (15) du corps en plastique (7) disposée en regard de la première extrémité ouverte (6) de la bague externe.

4. Palier à roulement (1) selon la revendication 3, **caractérisé en ce que** le siège de boîtier (21) de l'élément d'étanchéité annulaire (20) est disposé devant l'extrémité distale (27) du manchon métallique cylindrique, qui est pliée radialement vers l'extérieur en forme de L, et qui est incorporée dans la portion en forme de bride (29) du corps en plastique (7) de telle sorte que la surface frontale d'épaulement axial en plastique (22) de l'élément de support de capteur (5) soit, au moins au niveau de l'élément d'étanchéité annulaire (20), bordée ultérieurement par l'extrémité distale (27) du manchon métallique cylindrique (8).

5. Palier à roulement (1) selon l'une quelconque des revendications précédentes, **caractérisé en ce que** la bague interne (3) est pourvue, sur un côté de celle-ci opposé à l'élément de support de palier (5), d'une bride (9) pour l'assemblage d'une roue de véhicule.

6. Palier à roulement (1) selon la revendication 5, **caractérisé en ce qu'**une chambre fermée (11) est délimitée entre l'élément de support de capteur sous la forme d'un couvercle (5), la bague externe (2) et la bague interne (3), dans laquelle est reçu un élément à détecter (12), lequel élément à détecter (12) est porté intégralement par la bague interne (3) dans une position en regard d'une paroi inférieure (15) de l'élément de support de capteur, qui supporte un capteur (16) de manière protégée, en regard de l'intérieur de la chambre fermée (11), prévu pour détecter la vitesse de rotation de la roue du véhicule en coopération avec l'élément à détecter (12).
